# EUROPEAN PATENT SPECIFICATION

(11) **EP 1 358 741 B1**
(45) Date of publication and mention of the grant of the patent: **08.12.2004**
(21) Application number: 02711889.2
(22) Date of filing: 05.02.2002
(51) Int. Cl.: H04L 12/56, H04L 12/28, H04Q 7/32

(54) **MODULAR WIRELESS TERMINAL DEVICE**
MODULARES DRAHTLOSES ENDGERÄT
DISPOSITIF TERMINAL MODULAIRE SANS FIL

(30) Priority: 05.02.2001 FI 20010217
(43) Date of publication of application: 05.11.2003
(73) Proprietor: TeliaSonera Finland Oyj, 00510 Helsinki (FI)
(72) Inventor: KERTTULA, Jari, FIN-90530 Oulu (FI)
(74) Representative: Simmelvuo, Markku
(86) International application number: PCT/FI2002/000085
(87) International publication number: WO 2002/063835

(56) References cited:
- WO-A1-01/01717
- WO-A1-99/11042
- WO-A2-00/79727

## Description

### FIELD OF THE INVENTION

The invention relates to telecommunication. In particular, the invention relates to a new and improved modular wireless terminal device.

### BACKGROUND OF THE INVENTION

Wireless terminal devices such as e.g. mobile stations have become increasingly common during the last ten years. In addition, wireless local connections are coming. A wireless local connection is used to mean a connection of a short range, of the order of about ten meters at the most, based on radio link technique, that is intended to be used primarily indoors advantageously so that the receiver and the transmitter are located in the same room and using which more than two devices may exchange information. One specific purpose of the wireless local connections is to substitute the cable connections currently used. Further, with the wireless local connections one aims to replace the infrared links the disadvantage of which is a short range, which is typically only a couple of meters. Further, the infrared links require precise alignment, and there cannot be obstacles between the transmitter and the receiver. In addition, using the infrared links, only two devices at a time can exchange information.

One of these wireless local connections is the Bluetooth technique. Bluetooth uses an ISM band (Industrial Scientific Medicine, ISM) of 2.4 GHz for data transfer. In most of the countries, this frequency band is located between 2400-2483,5 MHz. The frequency band has been divided into channels of 1 MHz. The protocol used by the Bluetooth is a combination of circuit and packet switching. In data transfer one uses a spread spectrum based on frequency hopping. The maximum range is normally of the order of ten meters. By increasing the transmission power the range can be increased even to hundred meters. The connections may be bilateral or multilateral. The Bluetooth is advantageously implemented as a micro chip, which is either integrated directly into the device utilizing it, or it is installed afterwards as an additional card.

For mobile stations and other wireless terminal devices, the wireless local connection means, among other things, a more flexible usability than ever. If e.g. the headphones and microphone of the mobile station are cordless, the use of the mobile station e.g. for a motorist is clearly more easy and safe than nowadays.

The problem with the known wireless terminal devices is, however, the fact that they require manufacturer and model specific solutions. Although e.g. the mobile station would be equipped with headphones utilizing the wireless local connection, the headphones in question are manufactured specifically for the mobile station in question instead of using any available headphones. In that case e.g. the selection of interfaces is restricted and does not offer a real freedom of choice. Specially the needs of handicapped persons and other special groups are easily ignored.

### OBJECTIVE OF THE INVENTION

The objective of the present invention is to disclose a new kind of device which eliminates the above-mentioned disadvantages or at least significantly alleviates them. One specific objective of the present invention is to disclose a modular wireless terminal device which enables the utilization of the devices in the immediate environment as alternative modules of the terminal device.

### BRIEF DESCRIPTION OF THE INVENTION

The present invention concerns a modular wireless terminal device such as e.g. a digital mobile station or corresponding. The terminal device in question comprises a set of basic modules, each for performing a predetermined function of the terminal device in question that is in accordance with the utilization class, of which basic modules at least part communicates with each other by means of the wireless local connection. The term utilization class is used to mean classes into which the modules are divided according to their use. Utilization classes include e.g. a display, keyboard, loudspeaker and microphone. The wireless connection is e.g. a Bluetooth connection or the like.

According to the invention, the terminal device comprises one or more alternative modules, each for performing a predetermined function of the terminal device in question that is in accordance with the utilization class, which alternative modules communicate by means of the aforementioned wireless local connection. The term in the immediate environment is used to mean something in the range of the wireless local connection in use. The alternative module functions thus as a substitutive alternative for some basic module. A basic module included in the utilization class display is e.g. the display of the terminal's own, and an alternative module included in the same utilization class is e.g. a television equipped with a wireless local connection. Correspondingly, a basic module included in the utilization class keyboard is e.g. the keyboard of the terminal's own, and an alternative module included in the same class is e.g. the keyboard of a computer that is equipped with a wireless local connection. The term module is hereinafter used to refer both to basic and alternative modules.

Further, the terminal device in question comprises a central module which is used to identify the basic modules in the immediate environment of the central module as well as the alternative modules. Further, the central module is used to keep a record of the identified modules in question. Further, the central module is used to identify in what class each basic module and alternative module in the immediate environment is included. Further, the central module is used to keep a record of the identified utilization classes of the modules in question. Further, the central module is used to identify the state of each module in the immediate environment. Further, the central module is used to keep a record of the identified states of the modules in question. The term module is used to mean the fact of whether the module in question is engaged (e.g. in use, closed or defective) or available. Further, the central module is used to replace the basic module with an alternative module included in the same utilization class. Correspondingly, the alternative module in use is replaced with the original basic module when necessary. The replacement is performed when the central module has received a command from the user to perform the replacement in question. Thus, thanks to the invention, the user may keep changing the modules to be used according to his or her need when s(he) so wishes. Further, the terminal device in accordance with the invention may be so configured that the replacement happens automatically, e.g. when a module being in use is damaged, it is automatically replaced with some module being found in the immediate environment.

In one embodiment of the invention, the central module is used to identify the capacity classes of the basic modules and alternative modules as well as a record is kept of them. The modules have been divided into capacity classes according to their capacity. The term capacity is used to mean the suitability of the module in question for the function in accordance with its class. For example in a situation in which there are several alternative modules included in the same class in the immediate environment of some basic module, all the modules in question may be arranged in order of superiority by means of the capacity classification and thus determine whether it is worthwhile replacing the basic module with some of the alternative modules, and if it is worthwhile, then with what. For example the keyboard of a computer of the above-mentioned example is determined to belong to a better capacity class than the keyboard of the terminal's own, in case the keyboard of the computer in question is e.g. better as concerns its usability than the keyboard of the terminal's own. Correspondingly e.g. the remote controller of a television is determined to belong to a worse capacity class than the keyboard of the terminal's own, in case the remote controller in question is e.g. worse as concerns it usability than the keyboard of the terminal's own.

In one embodiment of the invention, the central module is used to notify the user of the mobile station, in case the state of such a module becomes available in the immediate environment of the central module that is included in the same utilization class but in a better capacity class than some module in use at the moment. In that case, when the user so wishes, s(he) may replace the module currently used with a module becoming available utilizing the central module.

In one embodiment of the invention, each module has its own identifier which comprises a field for the utilization class of the module in question, a field for the state of the module in question, as well as a field for the capacity class of the module in question. The identifier is transmitted to the other modules including the central module e.g. in a signaling message of a wireless local connection.

In one embodiment of the invention, the basic modules can be physically separated from each other.

In one embodiment of the invention, the terminal device is a digital mobile station.

The advantage of the present invention over prior art is that by means of it, the modules of a wireless terminal device, such as e.g. user interface units may be optionally replaced with units being found in the immediate environment that thus function as the alternative modules of the terminal device. In that case it is possible to introduce different kinds of user interface solutions e.g. for special user groups as well as to facilitate the daily use of the terminal device by offering better, already existing and familiar user interfaces for the needs of the mobile communication. At the same time one avoids the model and manufacturer-specific customized solutions that do not offer a real freedom of choice.

### BRIEF DESCRIPTION OF THE DRAWINGS

In the following section, the invention will be described by the aid of the accompanying examples of its embodiments with reference to the accompanying drawing, in which

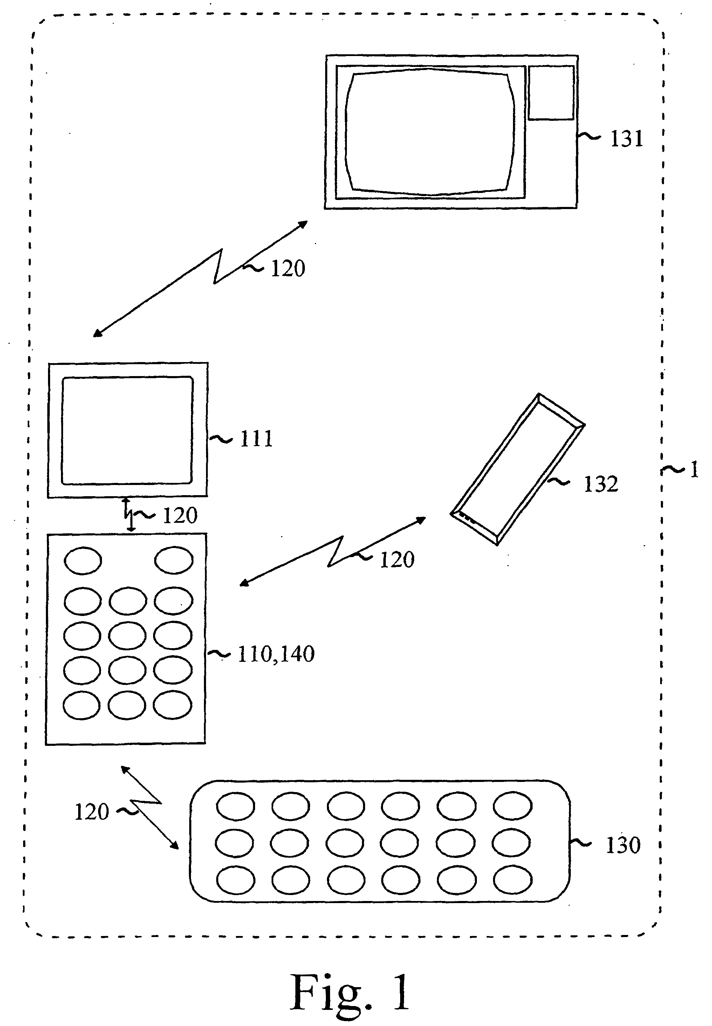

Fig. 1 is a block diagram illustrating one device in accordance with the invention.

### DETAILED DESCRIPTION OF THE INVENTION

Fig. 1 is a block diagram illustrating, by way of example, the components of one terminal device in accordance with the invention. The modular wireless terminal device 1 presented, by way of example, in Fig. 1 is a digital mobile station. The mobile station 1 in question comprises two basic modules each for performing a function in accordance with their own utilization class. The basic modules communicate with each other by means of a wireless local connection, in the example of Fig. 1 by means of the Bluetooth connection 120. The basic modules are the keyboard 110 and display 111 of the mobile station, which are included in the utilization classes display and keyboard, accordingly. The basic modules can be physically separated from each other.

The mobile station 1 further comprises alternative modules each for performing some predetermined function in accordance with their own utilization class, which alternative modules communicate by means of the Bluetooth connection 120. The term "in the immediate environment" is used to mean something within the range of the wireless local connection in use. The alternative module thus functions as a substitutive alternative for some basic module. In the example of Fig. 1, the alternative modules of the keyboard 130 of a computer that is included in the utilization class keyboard, television 131, which is included in the utilization class display, the remote control 132 of the television 131, as well as of the keyboard 130 of the computer both the television 131 and remote control 132 communicate with the devices in their immediate environment by means of the Bluetooth connection 120.

Further, the mobile station 1 comprises a central module 140 which is used to identify the basic modules and alternative modules in the immediate environment of the central module in question. Further, the central module 140 is used to keep a record of the identified modules in question. Further, the central module 140 is used to identify in what utilization class each basic module and alternative module in the immediate environment is included. Further, the central module is used to keep a record of the identified utilization classes of the modules in question. Further, the central module 140 is used to identify the state of each module in the immediate environment. Further, the central module 140 is used to keep a record of the identified states of the modules. The term state of the module is used to mean the fact of whether the module is engaged (e.g. in use, closed or defective) or available. Further, the central module 140 is used to replace the basic module with an alternative module included in the same utilization class. Correspondingly, also the alternative module in use is replaced with the original basic module when necessary. The replacement is performed when the central module 140 has received a command from the user to perform the replacement in question. Thus, thanks to the invention, the user may keep changing the modules to be used according to his or her need when s(he) so wishes.

In the example of Fig. 1 the central module 140 is used to identify the capacity classes of the basic classes and alternative classes as well as a record is kept of them. The modules have been divided into capacity classes according to their capacity. The term capacity is used to mean the suitability of the module in question for the function in accordance with its class. For example in a situation in which there are several alternative modules included in the same class in the immediate environment of some basic module, all the modules in question may be arranged in order of superiority by means of the capacity classification and thus determine whether it is worthwhile replacing the basic module with some of the alternative modules, and if it is worthwhile, then with what. In the example of Fig. 1, the keyboard 130 of a computer is determined to belong to a better capacity class than the keyboard 110 of mobile station's own, since the keyboard 130 of the computer in question is better as concerns its usability than the keyboard 110 of the terminal. Correspondingly, the remote controller 132 of a television is determined to belong to a worse capacity class than the keyboard of the terminal's own, since the remote controller 132 in question is worse as concerns it usability than the keyboard 110 of the terminal's own.

In the example of Fig. 1, the central module 140 is used to notify the user of the mobile station 1, in case the state of such a module becomes available in the immediate environment of the central module 140 that is included in the same utilization class but in a better capacity class than some module in use at the moment. In that case, when the user so wishes, s(he) may replace the module currently used with a module becoming available utilizing the central module 140.

In the example of Fig. 1, the central module 140 is e.g. in a bag, the display 111 and the keyboard 110 on a table and the headphone-microphone combination (not presented) the user is wearing. In addition, the user has the possibility of using other devices in his or her environment instead of the basic modules of his or her mobile station, such as e.g. a television 131 on the bookshelf of the living room instead of the small display 110 of the mobile station by means of the Bluetooth connection 120. The keyboard 130 of the computer that is located in the same room with the mobile station functions as the keyboard of the mobile station thereby facilitating e.g. the conducting of longer interactive service transactions by means of the mobile station. In the home environment e.g. the remoter controller 132 of a television functions as a keyboard using a Bluetooth connection 120 to the central module 140 of the mobile station 1. The central module 140 identifies the modules available in its environment that have been classified into capacity classes. For example, the keyboard 130 of the computer is better as concerns its capacity classification than the keyboard 110 of the mobile station's own, and the remote controller 132 of the television is in turn worse than the keyboard 110 of the mobile station's own. The central module offers available modules to the user to serve as an alternative user interface, in which case the user chooses the available modules desired by him or her, the user brings the available modules desired by him or her into his or her use and leaves the modules previously in use in reserve.

In the example of Fig. 1, each module has its own identifier which comprises a field for the utilization class of the module in question, a field for the state of the module in question, as well as a field for the capacity class of the module in question. The identifier is transmitted to the other modules including the central module 140 e.g. in signaling messages of the Bluetooth connection 120. In that case, by means of the identifier in question, the central module 140 is capable of identifying and keeping record of the utilization and capacity classes of the modules in its immediate environment.

The invention is not restricted merely to the examples of its embodiments referred to above, instead many variations are possible within the scope of the inventive idea defined by the claims.

## Claims

1. A modular wireless terminal device (1) which comprises:
one or more basic modules (110...11n), each for performing a predetermined function of the terminal device in question that is in accordance with a utilization class, of which basic modules at least part communicates with each other by means of a wireless local connection (120),
**characterized in that** the terminal device further comprises:
one or more alternative modules (130...13n), each for performing one of said predetermined functions of the terminal device in question that is in accordance with a utilization class, of which basic modules at least part communicates with each other by means of the wireless local connection, and
a central module (140) which is used to identify the basic modules and alternative modules in the immediate environment as well as to keep a record of them, which is used to identify the utilization classes of the aforementioned modules and to keep a record of them, which is used to identify the states of the modules in question and to keep a record of them and which is used to replace a basic module with an alternative module included in the same utilization class, or to replace an alternative module with a basic module included in the same utilization class, said replacement being performed automatically or in response to a command from a user.

2. The wireless terminal device according to claim 1, **characterized in that** the central module is used to identify the capacity classes of the basic modules and alternative modules and to keep a record of them.

3. The terminal device according to claim 2, **characterized in that** the central module is used to notify the user of the mobile station, if in the immediate environment such a module becomes available that is included in the same utilization class but in a better capacity class than some module in use at that moment.

4. The terminal device according to claim 2 or 3, **characterized in that** each module has got its own identifier which comprises a field for the utilization class of the module in question, a field for the state of the module in question as well as a field for the capacity class of the module in question.

5. The wireless terminal device according to claim 1, 2, 3 or 4, **characterized in that** the basic modules can be physically separated from each other.

6. The wireless terminal device according to claim 1, 2, 3, 4 or 5, **characterized in that** the terminal device is a digital mobile station.

## Patentansprüche

1. Modulares drahtloses Endgerät (1), umfassend:
ein oder mehrere Grundmodule (110...11n), jeweils zum Ausführen einer vorbestimmten Funktion des fraglichen Endgeräts nach Maßgabe einer Benutzungsklasse, von welchen Grundmodulen zumindest ein Teil miteinander über eine drahtlose lokale Verbindung (120) kommuniziert,
**dadurch gekennzeichnet, dass** das Endgerät weiterhin aufweist:
ein oder mehrere Alternativmodule (130...13n), jeweils zum Ausführen einer vorbestimmten Funktion des fraglichen Endgeräts entsprechend einer Benutzungsklasse, von welchen Grundmodulen mindestens ein Teil miteinander über die drahtlose lokale Verbindung kommuniziert, und
ein Zentralmodul (140), welches zum Identifizieren der Grundmodule und Alternativmodule in unmittelbarer Umgebung sowie zum Führen einer Aufzeichnung der Module sowie dazu dient, die Benutzungsklassen der genannten Module zu identifizieren und darüber eine Aufzeichnung zu führen, die wiederum dazu dient, die Zustände der fraglichen Module zu identifizieren und eine Aufzeichnung darüber zu führen, und die dazu benutzt wird, ein Grundmodul durch ein zu derselben Benutzungsklasse gehöriges Alternativmodul zu ersetzen, oder ein Alternativmodul durch ein zur selben Benutzungsklasse gehöriges Grundmodul zu ersetzen, wobei die Ersetzung automatisch oder ansprechend auf einen Benutzerbefehl erfolgt.

2. Drahtloses Endgerät nach Anspruch 1, **dadurch gekennzeichnet, dass** das Zentralmodul dazu verwendet wird, die Kapazitätsklassen der Grundmodule und Alternativmodule zu identifizieren und darüber eine Aufzeichnung zu führen.

3. Endgerät nach Anspruch 2, **dadurch gekennzeichnet, dass** das Zentralmodul dazu dient, dem Benutzer der Mobilstation zu signalisieren, wenn in der unmittelbaren Umgebung ein Modul verfügbar wird, welches zur selben Benutzungsklasse gehört, allerdings zu einer besseren Kapazitätsklasse zählt als ein gewisses, zu diesem Zeitpunkt in Benutzung befindliches Modul.

4. Endgerät nach Anspruch 2 oder 3, **dadurch gekennzeichnet, dass** dieses Modul seine eigene Kennung besitzt, welche ein Feld für die Benutzungsklasse dieses fraglichen Moduls, ein Feld für den Zustand des fraglichen Moduls sowie ein Feld für die Kapazitätsklasse des fraglichen Moduls enthält.

5. Drahtloses Endgerät nach Anspruch 1, 2, 3 oder 4, **dadurch gekennzeichnet, dass** die Grundmodule baulich voneinander getrennt sein können.

6. Drahtloses Endgerät nach Anspruch 1, 2, 3, 4 oder 5, **dadurch gekennzeichnet, dass** das Endgerät eine digitale Mobilstation ist.

## Revendications

1. Dispositif de terminal sans fil modulaire (1) comprenant :
un ou plusieurs modules de base (110...11n), servant chacun à effectuer une fonction prédéterminée du dispositif de terminal en question en fonction d'une catégorie d'utilisation, dans laquelle les modules de base communiquent au moins partiellement entre eux au moyen d'une connexion locale sans fil (120),
**caractérisé en ce que** le dispositif de terminal comprend en outre :
un ou plusieurs modules alternatifs (130...13n), servant chacun à effectuer une desdites fonctions prédéterminées du dispositif de terminal en question en fonction d'une catégorie d'utilisation, dans laquelle les modules de base communiquent au moins partiellement entre eux au moyen d'une connexion locale sans fil, et
un module central (140) utilisé pour identifier les modules de base et les modules alternatifs dans l'environnement immédiat et pour en conserver une sauvegarde, qui est utilisé pour identifier les catégories d'utilisation des modules susmentionnés et pour en conserver une sauvegarde, qui est utilisé pour identifier l'état des modules en question et pour en conserver une sauvegarde, et qui est utilisé pour remplacer un module de base par un module alternatif compris dans la même catégorie d'utilisation, ou pour remplacer un module alternatif par un module de base compris dans la même catégorie d'utilisation, ledit remplacement étant effectué automatiquement ou en réponse à une commande de la part d'un utilisateur.

2. Dispositif de terminal sans fil selon la revendication 1, **caractérisé en ce que** le module central est utilisé pour identifier les catégories de capacités des modules de base et des modules alternatifs et pour en conserver une sauvegarde.

3. Dispositif de terminal selon la revendication 2, **caractérisé en ce que** le module central est utilisé pour prévenir l'utilisateur de la station mobile de la disponibilité dans l'environnement immédiat d'un module compris dans la même catégorie d'utilisation mais ayant une meilleure catégorie de capacité que le module en cours d'utilisation.

4. Dispositif de terminal selon la revendication 2 ou 3, **caractérisé en ce que** chaque module possède son propre identifiant qui comprend un champ pour la catégorie d'utilisation du module en question, un champ pour l'état du module en question ainsi qu'un champ pour la catégorie de capacité du module en question.

5. Dispositif de terminal sans fil selon les revendications 1, 2, 3 ou 4, **caractérisé en ce que** les modules de base peuvent être séparés physiquement l'un de l'autre.

6. Dispositif de terminal sans fil selon la revendication 1, 2, 3, 4 ou 5, **caractérisé en ce que** le dispositif de terminal est une station mobile numérique.
